# EUROPEAN PATENT APPLICATION

(11) **EP 2 242 212 A2**
(43) Date of publication of application: **20.10.2010**
(21) Application number: 10275039.5
(22) Date of filing: 15.04.2010
(51) Int. Cl.: H04L 12/28

(54) **Digital Content Distribution System and Method**

(30) Priority: 15.04.2009 GB 0906372
(71) Applicant: TV Mobili Limited, Henfield, Sussex BN5 9DA (GB)
(72) Inventor: Freeman, Mark, Towcester, Northamptonshire NN12 7PE (GB)
(74) Representative: Exell, Jonathan Mark

(57) **Abstract**

A digital content distribution system and method is disclosed. The system includes a media server (20) arranged to provide a virtual digital content repository (25), the virtual digital media content repository (25) comprising local digital media content (26) and remote digital media content (45), local digital media content (26) being media content that is locally accessible to the media server (20) and remote digital media content (45) being media content that is remotely accessible to said media server from a remote source (40) and is subject to authentication, wherein the media server (20) is arranged to serve media content from the virtual digital content repository (25) on request to one or more client systems (30), upon request of remote digital media content (45), the media server (20) being arranged to authenticate with said remote source (40), obtain data on said requested remote digital media content (45) from the remote source (40) and serve the remote digital media content (45) to the requesting client system (30).

## Description

### Field of the Invention

The present invention relates to a content distribution system and method that are particularly applicable for digital media distribution between remote computer networks sand most particularly between firewall protected networks. Digital media can be in many forms including, but not limited to; music, photos, videos and games.

### Background to the Invention

There are many systems currently available that allow users to view digital content on their televisions and other home media devices. However, these systems are often incompatible with one another and are not trivial to set up.

One particular issue that a user often has to address is that of a firewall. Most computers have software firewalls and any sensibly configured network will also have a hardware firewall either built into a router or situated between a router and the local network at the boundary to the outside world. Firewalls are typically configured to allow outgoing traffic and replies to communications originated internally but to block communications originating outside the computer (or local network in the case of the router).

Universal Plug and Play (UPnP) was devised with the goal of allowing devices to connect seamlessly and to simplify the implementation of networks in the home (data sharing, communications, and entertainment). UPnP devices are described as being "plug-and-play" in that when connected to a network they automatically announce their network address and supported device and services types. This enables clients that recognize those types to immediately begin using the device.

UPnP was originally developed for use in a local and private network. Consumption of remote services or data was not catered for in the UPnP standards. A traditional UPnP media server only presents content to a UPnP client that is located within your local network.

While various changes and extensions to UPnP have been proposed to address some of these issues, they are on the whole insecure and often result in compatibility issues with devices that do not support such extensions.

### Statement of Invention

According to an aspect of the present invention, there is provided a digital content distribution system including:
a media server arranged to provide a virtual digital content repository, the virtual digital media content repository comprising local digital media content and remote digital media content, local digital media content being media content that is locally accessible to the media server and remote digital media content being media content that is remotely accessible to said media server from a remote source and is subject to authentication, wherein the media server is arranged to serve media content from the virtual digital content repository on request to one or more client systems, upon request of remote digital media content, the media server being arranged to authenticate with said remote source, obtain data on said requested remote digital media content from the remote source and serve the remote digital media content to the requesting client system.

The media server is preferably arranged to present the virtual digital media content repository as comprising content available locally, the media server being arranged to perform said authentication and obtaining of data on remote media content data transparently to said requesting client system.

The media server may comprise a Universal plug and play, UPnP, handler that is arranged to serve media content from the virtual digital content repository on request to said one or more client systems.

The remote source is preferably a further media server arranged to serve local digital media content to said media server or direct to said requesting client system upon authentication of a request from the media server.

The digital content distribution system preferably further comprises a tracker system arranged to communicate with the or each media server, wherein the or each media server is arranged to periodically provide data to said tracker system, said data including a network address at which the media server is contactable.

The or each media server may be arranged to provide data to said tracker system on systems or users to be permitted access to local digital media content, for each local user or system the or each media server being arranged to periodically obtain data from the tracker system on other media servers that the local user or system is designated as being permitted access to and to update said virtual digital media repository in dependence on said obtained data.

The media server may be arranged to communicate with said further media server by adding access credentials to an UPnP request received from said client system, inserting the modified UPnP request within an HTTP communication and passing the HTTP communication to the further media server, the further media server being arranged to extract the modified UPnP request from the HTTP communication and, subject to authentication using said access credentials, process said UPnP request as a conventional UPnP request.

The digital content distribution system may preferably comprise a plurality of media servers, each being remote of each other and each being arranged, subject to authentication according to predefined access credentials, to serve local digital media content to one or more others of the plurality of media servers.

According to another aspect of the present invention, there is provided a digital content distribution method including:
providing a virtual digital content repository at a media server, the virtual digital media content repository referencing local digital media content and remote digital media content, local digital media content being media content that is locally accessible to the media server and remote digital media content being media content that is remotely accessible to said media server from a remote source and is subject to authentication;
serving media content from the virtual digital content repository on request to one or more client systems; and,
upon request for remote digital media content referenced in the virtual digital media repository, causing the media server to authenticate with said remote source, obtain data on said requested remote digital media content from the remote source and serve the remote digital media content to the requesting client system.

The method may further comprise:
presenting the virtual digital media content repository as comprising content available locally; and,
performing said authentication and obtaining of data on remote media content data transparently to said requesting client system.

Preferably, the remote source is a further media server, the method further comprising:
serving local digital media content from said further media server to said media server or direct to said requesting client system upon authentication of a request from the media server.

The method may further comprise providing a tracker system arranged to communicate with the or each media server, and periodically providing data from the or each media server to said tracker system, said data including a network address at which the respective media server is contactable.

The method may further comprise providing data from the or each media server to said tracker system on systems or users to be permitted access to local digital media content,
the or each media server periodically obtaining, for each local user or system, data from the tracker system on other media servers that the local user or system is designated as being permitted access to; and,
updating the virtual digital media repository of the respective media server in dependence on said obtained data.

The method may further comprise:
communicate between the media server and the further media server by adding access credentials to a UPnP request received from said client system;
inserting the modified UPnP request within an HTTP communication and passing the HTTP communication to the further media server,
extracting the modified UPnP request at the further media server from the HTTP communication; and,
subject to authentication using said access credentials, processing said UPnP request at the further media server as a conventional UPnP request.

15. A digital content distribution system according to any of claims 9 to 14, further comprising operating a plurality of media servers, each being remote of each other and each being arranged, subject to authentication according to predefined access credentials, to serve local digital media content to one or more others of the plurality of media servers.

Embodiments of the invention seek to address problems faced in this field in a manner that utilises the industry standard protocol UPnP to serve content to and between client devices yet is able to extend over a wide area network and provide security and authentication to support such operation. Embodiments of the present invention may optionally enhances UPnP functionality to provide content distribution via Peer-to Peer networks and/or to provide access to commercial "premium content" creating a solution which could also be utilised by companies in the media sector.

In particular, embodiments of the present invention seek to extend the reach of UPnP protocols beyond the local network, allowing sharing of content between friends and family and the consumption of premium content from anywhere in the world.

Embodiments optionally allow a connected 'eco-system' of servers to load share content across a network in such a way that it is still a fully compliant UPnP media server.

To enable sharing of content, servers are preferably capable of distributing content across the internet. Security is required such that shared content is not automatically placed into the public domain. Instead, the publisher has control over who can receive their content. This has been achieved in such a way that the system is still a fully UPnP compliant server.

### Brief Description of the Drawings

Embodiments of the present invention will now be described by way of example only with reference to the accompanying drawings in which:
Figure 1 is a schematic diagram of a digital media content distribution system according to an embodiment of the present invention;
Figure 2 is a schematic diagram illustrating components of a media server according to an embodiment of the present invention;
Figure 3 is a schematic diagram illustrating operation of a digital content distribution system according to an embodiment of the present invention; and,
Figure 4 is a flow diagram illustrating the steps taken by a media server to decide on authentication.

### Detailed Description

The basic UPnP security is wide open and represents a very real security risk to the end user's network. Embodiments of the present invention addresses this by utilising a system and method that is transparent to existing UPnP framework without disrupting the current UPnP functionality. This document assumes that the reader is fully conversant with the UPnP Protocol and calling methods utilised by the media server, the details of which are available at http:/www.upnp.org/standardizeddcps/default.asp and are incorporated herein by reference.

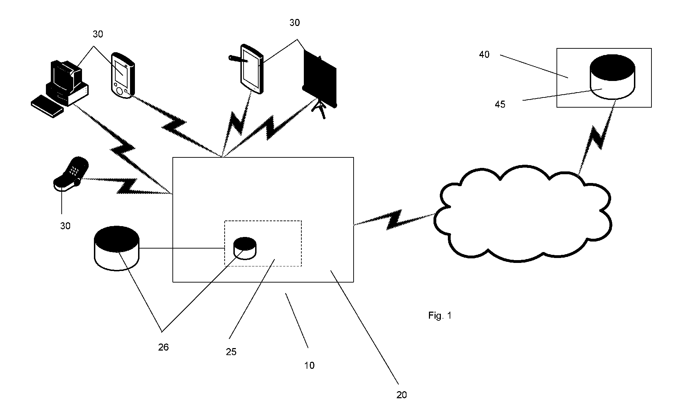

Figure 1 is a schematic diagram of a digital media content distribution system according to an embodiment of the present invention.

The digital media content distribution system 10 includes a media server 20 arranged to serve content to one or more local client systems 30. The media server 20 operates a virtual digital media content repository 25 that stores or links to local digital media content 26 and also links to remote digital media content 45. The remote digital media content 45 is media content that is remotely accessible to the media server 20 from a remote source 40 and which is subject to authentication and/or access control. The media server is arranged to serve media content from the virtual digital media content repository 25 on request to one or more of the client systems 30.

Upon request of remote digital media content 45, the media server is arranged to authenticate with the remote source 40, obtain the requested remote digital media content 45 from the remote source 40 and serve the remote digital media content 45 to the requesting client system 30.

Preferably, the media server 20 presents a homogeneous collection of media content to the client systems 30 such that it appears to be a single collection and is accessible in the same way irrespective of whether it is local to the media server, local to the media server's network, remotely accessible without charge (such as shared by friends and family or accessed in a user's home from a device away from the home such as in a hotel, on the move etc) or premium content for which access attracts charges. Preferably, the virtual digital media content repository 25 portrays all content as being available locally. This satisfies the limitations of clients such as UPnP clients which can only access content within the local network to which they are attached.

In order to enforce security and authentication and prevent unauthorised access to content, remote access is subject to authentication and/or access control. Therefore, a media server can only access remote sources for which it has been granted access (either explicitly by friends and family or by purchase of rights in the case of premium content). Preferably, any authentication and obtaining of remote media content data is performed by the media server 20 in a manner that is transparent to the requesting client system.

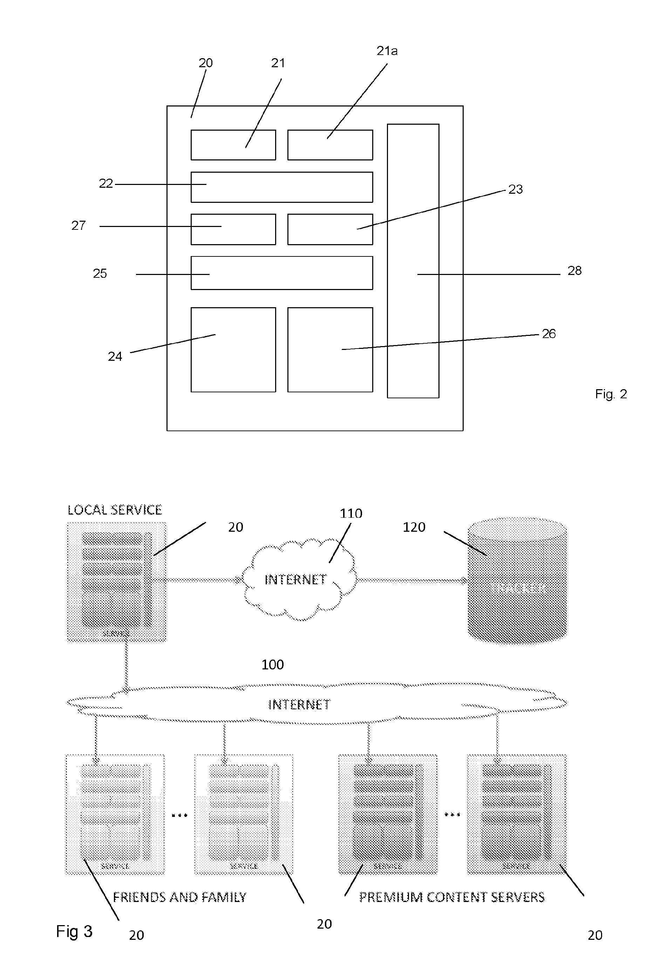

Figure 2 is a schematic diagram illustrating components of a media server according to an embodiment of the present invention.

The media server 20 includes:
an HTTP Handler 21 - This runs a lightweight HTTP stack that encodes/decodes HTTP requests/messages for functions such as communication with the remote source 40.
a UPnP Handler 21 a - this protocol handler is responsible for encoding/decoding network requests from the local network. It sits as a layer on top of the HTTP handler and is responsible for distributing the media content.
a Local Security Handler 22 - this is responsible for determining if the object (the digital media content) being requested by the connected client is local to the current media server (on the same local network/physical machine) or remote (Stored on another media server on a friends machine or commercial media server who has given the current user access to their content).
the virtual digital media content repository 25 - this includes a database of links to objects and records whether each object is remote or local.
a streaming handler 23 - receives requests from the UPnP handler and determines the location of the requested media content by referring to the virtual digital media content repository 25. Requests for local content are passed to a local media handler 24 and requests for remote media is passed to a remote media handler 26. This is also responsible for the distribution of the physical media across the network (local and remote). It uses HTTP to deliver its content and is a high bandwidth service due to the nature of the content it is serving up. The content directory service allows clients to make calls into the streaming handler with the appropriate parameters necessary for retrieving and streaming the media.
the local media handler 24 - Interfaces with physical content that is located locally and serves this content back to the calling layer (UPnP or HTTP handler).
the remote media handler 26 - determines the remote location of the content and then refers the caller's request on to that remote location.
a content directory 27 - this is responsible for delivering the meta data associated with each object to connected clients. This service acts as a directory lookup service for all the content that is accessible. This service may be integrated within the virtual digital media content repository 25.

Optionally, the virtual digital media content repository 25 includes or may be linked to a content directory which maintains an ordered hierarchy of all content in a local media repository.

Preferably, the media server 20 also includes a tracker handler 28 which is responsible for handling communication with a central tracker system (discussed below in more detail).

Figure 3 is a schematic diagram illustrating operation of a digital content distribution system according to an embodiment of the present invention.

The digital content distribution system 100 includes a plurality of media servers 20 as discussed with reference to Figures 1 and 2 connected to a communication network 110 which allows media server 20 to media server 20 communication. The digital content distribution system 100 also includes a tracker system 120 which is also connected to the communication network 110 and is arranged to communicate with the plurality of media servers 20.

Preferably, the tracker system 120 is operated a web service that resides at an always on location on the internet. Optionally, multiple tracker systems 120 may be operated for redundancy. The tracker system 120 is responsible for communicating with each media server 20 and for maintaining a database of locations (address on the communication network such as IP address) of every media server 20. The tracker also maintains a central database linking users with media servers 20 to which they may have access to.

It will be appreciated that there will be media servers 20 where explicit authorisation has been given to allow a user to access its content and there may also be media servers (typically commercial) that may provide limited access to enable advertising of content. As definitive access rights are resolved only at the local media server that provides access to the local content, it may also be the case that a user's access rights have expired or have been revoked and that this information has not yet been propagated back to the tracker system 120.

One function of the tracker handler 27 of each media server in the content distribution system is to periodically update the tracker system 120 with its location (such as IP address or other unique network locator). In this respect the tracker system 120 acts as a 'yellow pages' lookup service so that one media server 20 can easily locate another media server 20 in the content distribution system.

As discussed above, the tracker system 120 also maintains a non-authoritative list of which media servers 20 a given user has access to. This information is used by a given instance of a media server 20 to establish a matrix of other media servers 20 that it has connectivity to. This list is maintained in 2 ways:

Friends and Family - A user can designate the identities of friends and family that a media server 20 may be accessed by. These users are invited to access the media server 20 and when the media server 20 next updates the tracker system 120, data on users authorisations is also updated.

Premium Content - The identities of premium content servers that have a subscription for a media server 20 are also stored in the matrix.

Although providers of remote content have so far been referred to as remote sources, in a preferred embodiment one or more of the remote sources are media servers 20 (it will be appreciated that a mix of media servers and other remote sources could be used). Content Sharing allows one media server 20 to communicate with other remote media servers 20 and present their content as if it was local.

Each media server 20 periodically obtains a list of remote media servers 20 that it has access to from the tracker system 120. This list of remote media servers is used to populate the media server's virtual digital media content repository 25 with data on each remote media server 20 that is accessible. Optionally, the local media server may query each accessible remote media server to identify accessible remote media content and present it alongside locally accessible media content.

In order to present this remote content as being local, the local media server 20 acts as a client to this content distribution system of remote servers. As a result, content presented as being available to the client 30 of the local media server 20 is the aggregate of both the content held locally by this server and that available in the content distribution system of remote servers.

As far as the client is aware, all the content comes from the local server. At this point no consideration has been given as to whether the local server is allowed to access the remote content.

### Tracker System 120

The tracker system 120 handles various functions:

### Maintaining current IP Address and Port mapping for media servers 20.

This process maintains for the smooth operation of the whole system/media server. Periodically, media servers connect to the tracker system and records their current 'external' port and address. This typically occurs once a minute, however, the frequency can be adjusted accordingly. It will be appreciated that the periodic updating could be event driven as well as or instead of time based polling.

### Updating of Central Friends List.

Whenever a friend is added to a local media server, a request is made to the tracker system and the user entry is updated there, so that the tracker system can keep track of which friends can see the content on the specified media server instance.

### Receiving Updated Friend Details.

Periodically, each media server 20 will check with the tracker system and will update its local friends list with details received from the tracker system. Any media server entry that is received from the tracker system is recorded in the local database, along with the physical address that the remote media server reported the last time it contacted the central tracking service. Once the server update has been received, the icon for that media server will automatically appear in the user interface provided by the user's local media server. The remote media server is instantly available for browsing. The same process happens in reverse whenever a user removes a friend from their local media server.

### Central Database.

At the heart of the tracker system is a database that records the location (IP Address/Port) of every client media server. This database is typically refreshed completely every 30-60 seconds, ensuring that the service is always kept up to date. The tracker system also stores a database of relationships and security privileges for every media server instance. As discussed above, each client media server is responsible for updating this table with its list of friends on a regular basis. Whenever an instance connects to the tracker system, it passes over its registration details. These details are cross referenced against the above mentioned tables and a list is created that determines who the local system is allowed to interact with and where they are. This data is then passed back to the requesting media server which records this information in its local database. The next time the user opens up a media player/browser, the 'My Friends' list will be auto populated from information exchanged during the above process.

### Service Registration

Registration is performed automatically by each media server and occurs periodically refreshing the central tracker system with key information. The service registration call preferably uses an XML protocol to communicate with the tracker system 120. In this embodiment , the following information is passed to identify and locate the media server (although it will be appreciated that other variations and combinations are possible)::
System Description
System Update ID
System Hash Code
Transaction Hash Code
System Version
The Configured External Address
System Port

By using the HTTP headers that are passed into it, the tracker system is able to record the external TCP/IP address and port of each media server. This information is stored in the central database and is used to marshal communication in the network.

The tracker system is also responsible for assigning a system hash code (or other unique identifier) to each media server that calls in. Once the system hash code has been assigned, a media server will call in using that code to identify itself from that point forward.

### User Registration

Each user account that is created on a local media server for a user (local or remote) is communicated to the tracker system and is assigned a system wide unique numeric identifier. The information that is passed to the tracker system contains the following elements.

### User EMail Address

### User Password

Corresponding user accounts are created in the tracker system and are then mapped to the service registration for the media server.

The tracker system communicates the unique numeric identifier for each user passed into it during the transaction back to the connected client. The information that is passed back to the calling client is as follows:
User EMail Address
User ID

The User ID is a unique identifier. It is then turned into a hash code (or other unique identifier) by the tracker system and the hash code is then used as a security token when communicating on behalf of the user account with the media server. All communications with the tracker system from that point on will identify the user by using their hash code.

The local media server creates an additional User Checksum field which is maintained in the local database. The checksum is created when the record is added to the local database and uses a secret algorithm for its generation. Whenever a user record is read out of the local database a check against the checksum field can be made. If the check does not validate correctly then the system can discard the user because it is likely that:

The user ID has been modified; or

The user ID was added maliciously by another software application and a hacking attempt is being made on the system

### Friend Registration

A user is able to add Friends to their Local media server. A friend is simply an e-mail address of a friend or colleague that you want to share your content with. All the friends that have been configured at the local media server are communicated to the tracker system so that the appropriate mappings can be made. The information that is passed across in the communication is as follows:
Friend EMail Address

The Tracker can identify the friend from their e-mail address and then formats a response for each friend passed over in the transaction. The response message includes the following fields:
Friend EMail Address and Friend ID

### Security Model In Operation

This section details the logic and process flow for the security model in normal operating mode. The security model encompasses all of the steps necessary to create a secure operating environment for the system. The following sequence of actions is performed by every media server on a fixed periodic cycle.

*Media Server Registration -* adding/updating the registration for each media server. The main purpose of this call is to retrieve the system wide id for the media server that is assigned by the central tracker. Once the media server receives this value it is permanently stored in the local database. The hash code for each server can be generated using this id as a key. The degree to which media server registration is required or enforced will depend on particular implementations. It will be appreciated that security provided by user based ID and authentication will be sufficient in many cases without a server needing to also be authenticated.

*User Registration -* adding/updating the registration details for each user in the tracker system. Every single user in the system is assigned a unique numeric identifier by the tracker system. The purpose of this call is to retrieve the unique id for every user that is registered locally with the media server.

*Friend Registration -* adding/updating the registration details for each friend in the system. A friend on a particular user's installation will typically exist as a user on the owner's media server and it is this call that matches friends on one media server to users on another. The main purpose of this call is to retrieve the system wide numeric identifier for each 'friend' on the local system.

The friends and users central 'id' are all stored in the local users table and updated regularly if those identifiers change. The system never stores the hash code anywhere in the system so that if another media server was to read the local database it will not be able to guess the hash codes used to communicate through the system.

Hash Code Generation - The hash codes in the system are preferably 32 byte MD5 hash codes (although others could of course be used) and are generated from a combination of known (or public) information, ie. the System/User/Friend ID as recorded and passed back by the tracker system. A series of private keys are also compiled into the media server and the tracker system.

The tracker system and the local media server know how to generate these keys from the public and private information supplied and can validate calls by interpreting these keys and matching them against their local databases.

### Distributed Content Delivery

Distributed Content Delivery (DCD) is a method for spreading load for commonly consumed content. With DCD, the content owner can optionally re-direct a media server 20 requesting remote content to other locations where fragments of the requested content may reside. These 'other locations' may be peer media servers, or content consumers themselves that have previously consumed this content. In both cases these media servers/content consumers can now act as replicating nodes (Replicators) for that specific item of content. It is the job of the content owner to keep track of these replicators. DCD enhances the system by:
- Reducing the load on the content owning server.
- Bandwidth is distributed across the internet, instead of all being funnelled to the same location.

### Local Security Handler

The local security handler 22 of each media server 20 is responsible for keeping a repository of all files on the local hard-disk and locally connected devices. It is also responsible for the formatting of the output data into an appropriate UPnP/DLNA protocol format. Once that is done it passes the UPnP data back onto the HTTP Protocol Handler so that it can wrap the content in HTTP headers and inturn pass the call back onto the remote media server 20 that requested the data.

Requests into a media server 20 arrive in the described embodiments via either via UPnP or HTTP (although it will be appreciated that other protocols could also be used). In either case, before it can be handled the request must first be authenticated by the media server 20. Authentication can be broken down into two distinct types; local requests or remote requests. A local request is one that has been identified as originating on a Local Network and will have a local address on the network. A remote request is one that has been received over the internet or other wide area network and will bear a different originating address to that of the local network. Local requests are automatically granted access whereas remote requests must be authenticated using credentials supplied in the request itself.

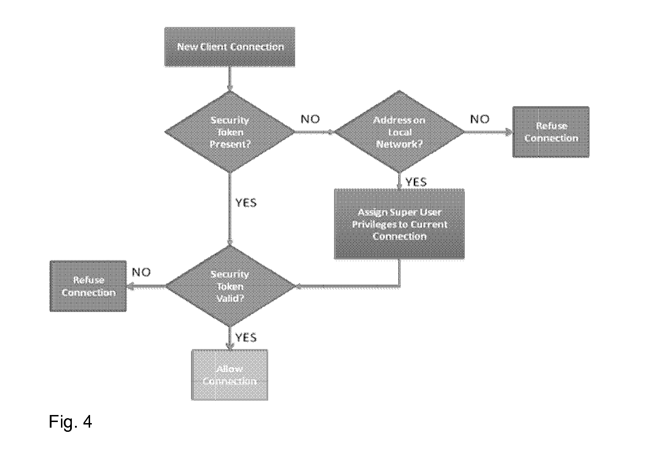

Preferably, additional, bespoke, fields in the UPnP protocol are used to allow one media server 20 to embed user credentials and tokens to be authenticated by another media server 20. Figure 4 is a flow diagram illustrating the steps taken by a media server to decide on authentication.

The remote caller is responsible for adding the appropriate credentials into the request message. The credentials can appear in several forms as follows:
- Username/Password - Standard HTTP Challenge Response method.
- Access Token - An encrypted key derived from public information that is passed over in the request and private information that is compiled into the service.
- Torrent Key - Supplied by the service that owns the content and used in distributed content delivery.

### UsemamelPassword Authentication

Each media server 20 may provides a mechanism for managing local user accounts. Data on these accounts is stored within the local media server's database and as such can be authenticated against. The remote client (media server) connects to the local media server 20 and provides a username and password that is validated against the local database. If the credentials that are passed over do not match a user account in the local database then access is denied and a standard HTTP 401 (Access Denied) error is returned.

### Access Token Authentication

Access Token Authentication is an alternative to username/password authentication in which the password is replaced by an Access Token (AT) that corroborates the username. The access token is generated using a secret algorithm that combines a number of different variables, including the username, into a single encrypted key. Media servers (or other client devices capable of supporting access tokens) wishing to use this method will generate an AT and pass that as part of the request along with some (but not all) of the constituent variables in plain text. The content owner media server or other service performs the same algorithm that the requestor has already performed using the plain text variables. If the AT as calculated by the content owner matches the AT passed in by the requesting client, then the request is deemed to have originated from a valid source.

Once the AT has been validated the username is then looked up in the local media server database. If the username exists in the local database then access is granted. In the case of Premium Content servers, there is chance that this match may fail due to the subscription mechanism (payment is likely to be handled elsewhere and propagation of new accounts or account updates may take time). If this is the case, the local media server 20 refreshes its list against the tracker system 120 and repeats the test.

### Distributed Content Key Authentication

When a replicator is defined by the content owner, it is allocated a Distributed Content Key (DCK) that will unlock that fragment. Requests for the fragment must be accompanied by its DCK.

When the content owner redirects a requesting client to a replicator, as well as passing back the location of the replicator, it also passes back the DCK.

In preferred embodiments, media servers each offer a simple (preferably web based) interface that allows users to add their friends to the list of people that are allowed access to the local media server. This list is synchronised with the tracker system. When a remote client/media server connects to a media server the credentials passed must match one from the list of users stored in the local user database. Keeping the security list local to each media server greatly increases the security of the system because only the local media server is able to accept modifications to the list of users that have access to that media server.

Security Flow - The media server conforms to the UPnP/DLNA specification/protocol but preferably has some improved security characteristics that are described by way of example only below. It will be appreciated that these changes may vary depending on particular implementation.

Root Device - The Root Device descriptor is the first access point in the system and is the only visible part of the media server. This descriptor must be called with one of the following scenarios:

Username(email) and Password (plain text) - the username and password in plain text of the connecting user. the user must exist as a 'local user' and allows people to get access to their content from outside their homes using 3rd party media players.

### Sample Call - RootDevice?user_id=a.user@me.com&pwd=abcdef

Valid User/Friend Hash Code - the system derived hash code for a specific user/friend. if no friends/users exist in the local system the Session Hash can also be used at this point.

### Sample Call - RootDevice?user_hash=aaaaaaaabbbbbbbbccccccccdddddddd

No Parameters - can only be used if the device connecting to the media server is physically on the same local network - ie. the user's games console, or similar that is connected to the same home router

### Sample Call - RootDevice

*Failed Authentication -* If none of the above criteria are met the system will respond with a security access error back to the main client and no further communication takes place.

*Successful Authentication -* If one of the above criteria is met the media server will generate an Access Key that the client must use to communicate with Content Directory inside the server from then on.

Content Directory - Once the Root Device has been queried it will generate the Access Key that it passes back to the calling client so that it can use that access key in all future communications. Because this key is transmitted back to all calling clients that successfully authenticate it is backwardly compatible with older devices, and other clients that are currently out on the market, thus making this a secure, flexible protocol. Optionally, the content directory can only be accessed by clients presenting a valid Access Key and in such an arrangement it would be used in every single query of the Content Directory.

Remote (Proxied) Calls - If an external client knows the current Access Key and IP Address/Port for a specific media server, it can connect straight to the content directory without having to access the Root Device url first. Most clients are transient (ie. they forget the information when powered off) and have to first query the Root Device url for Content Directory access privileges. This allows remote media servers to directly query another instance if it can provide the right Access Key and user credentials. If the server part of the Access Key does not match the local system a lookup is performed internally against all of the registered friends to see if the hash matches any of those servers. If a server is matched the call is passed onto that server using the passed in user credentials and the new system hash code for the destination server.

Content Stream - The Access Key must also be presented to the content stream url in order to access a specific piece of content from inside the Content Directory. If this key is not given, then access to the content stream for a specific piece of content will be denied by the media server.

### Content Sharing

In a traditional UPnP environment, the UPnP server sits on the local network and broadcasts its presence to any listening device. Client devices can then connect to the server, browse its contents and render them. Access to the UPnP server is open to any client but ONLY on the local network. Embodiments of the present invention extend this traditional mode of operation by not only allowing access from the local network but also from anywhere in the world. Content sharing is the process by which content can be published to consumers on a remote network.

Embodiments of the present invention use a very simple, lightweight mechanism for publishing content. The tracker system is responsible for recording who has content to share and with whom. Each individual media server periodically updates the tracker system's database with the list of consumers that are allowed to access it, this, in turn, allows the reverse operation to be performed and the media server gets the list of remote media server it is allowed to access. This process is outlined in the following steps:

Owner defines who is allowed to consume content published from his installation. This is achieved by entering the 'names' of those users to whom the content will be made available. Names are usually in the form of an email address.

The media server transfers the list of email addresses to the tracker system.

The tracker system stores the list of allowed consumers for this installation in its database against the ID of the publishing installation (PublishTo list). At the same time the connection details for this server are also stored (IP address and port).

The tracker system prepares a list of remote tracker systems that the calling installation can access. This is done by querying the PublishTo list for entries where the calling installation has been included as a consumer.

The list of remote media servers this media server has access to is returned back along with the connection details of each media server.

This information is retained by the tracker system in three core tables, namely:
*RegisteredServers -* a list of all servers that are currently in operation.
*RegisteredUsers -* a list of all users that are current registered with the system.
*PublishToList -* a lookup table that links users with their friends.

The PublishTo list is simply a map of publishers against consumers. Each time a media server makes a call into the Tracker the list of who can access it is updated and the list of what it can access refreshed.

Communication with the tracker system preferably occurs through the a single PHP script. This script accepts parameters in xml format and supplies a list of return values in xml format. The calling client media server is responsible for decoding the xml returned and making sense of the content provided.

Updating the tracker system is in itself a two part process:
Reaffirm this media server's presence. As part of this, the tracker system is made aware of the address of this installation. This is especially important when the installation has a dynamically allocated IP address which is subject to change.
Pass to the tracker system the list of users with whom this media server is prepared to share content with.

These two pieces of information combined together define who can access content from this media server and how they contact it. This is stored within the tracker system's database along with similar information from all other media servers operating in accordance with embodiments of the present invention.

### Accessing remote content by UPnP renderers (clients)

Remote content appears as if it is local to the local media server the client is communicating with. The UPnP renderer is completely unaware that the content it is asking for is stored remotely on a peer media server. When the local renderer makes a request of the local media server for remote content, the local media server establishes an HTTP connection with the remote media server (the connection details of which were returned during the call to the tracker system) and proxies the UPnP client request to it. At the remote media server, this request appears as just another UPnP client request (with added authentication credentials). The response to the request is returned to the local media server and then onwards to the requesting local renderer.

The above description is true for nearly all UPnP requests from the local renderer. The local server proxies the requests to the remote server. When it comes to the final request for the actual content itself, where supported by the local renderer, the local server instead returns a fully qualified URI for that content. This URI references the remote server directly and is an optimisation to avoid the unnecessary overhead of proxying the content stream.

It should be noted that media servers can operate independently of the tracker system. In this mode they can function as regular UPnP servers and can optionally respond to direct requests assuming appropriate user accounts are already in place.

To be able to publish content, it is highly likely that the remote UPnP request will need to traverse a firewall. The above description assumes that the firewall has been opened up in a manner to allow this traffic to pass freely. However, in most cases, servers according to embodiments of the present invention are capable of configuring firewalls to accommodate this.

Finally, it will be noted that the Content Directory discussed above has been developed in accordance with UPnP guidelines and as such is fully compliant with the specification.

## Claims

1. A digital content distribution system including:
a media server arranged to provide a virtual digital content repository, the virtual digital media content repository comprising local digital media content and remote digital media content, local digital media content being media content that is locally accessible to the media server and remote digital media content being media content that is remotely accessible to said media server from a remote source and is subject to authentication, wherein the media server is arranged to serve media content from the virtual digital content repository on request to one or more client systems, upon request of remote digital media content, the media server being arranged to authenticate with said remote source, obtain data on said requested remote digital media content from the remote source and serve the remote digital media content to the requesting client system.

2. A digital content distribution system according to claim 1, wherein the media server is arranged to present the virtual digital media content repository as comprising content available locally, the media server being arranged to perform said authentication and obtaining of data on remote media content data transparently to said requesting client system.

3. A digital content distribution system according to claim 1 or 2, wherein the media server comprises a Universal plug and play, UPnP, handler that is arranged to serve media content from the virtual digital content repository on request to said one or more client systems.

4. A digital content distribution system according to any preceding claim,
wherein said remote source is a further media server arranged to serve local digital media content to said media server or direct to said requesting client system upon authentication of a request from the media server.

5. A digital content distribution system according to any preceding claim, further comprising a tracker system arranged to communicate with the or each media server, wherein the or each media server is arranged to periodically provide data to said tracker system, said data including a network address at which the media server is contactable.

6. A digital content distribution system according to claim 5, wherein the or each media server is arranged to provide data to said tracker system on systems or users to be permitted access to local digital media content, for each local user or system the or each media server being arranged to periodically obtain data from the tracker system on other media servers that the local user or system is designated as being permitted access to and to update said virtual digital media repository in dependence on said obtained data.

7. A digital content distribution system according to claim 4, wherein the media server is arranged to communicate with said further media server by adding access credentials to an UPnP request received from said client system, inserting the modified UPnP request within an HTTP communication and passing the HTTP communication to the further media server, the further media server being arranged to extract the modified UPnP request from the HTTP communication and, subject to authentication using said access credentials, process said UPnP request as a conventional UPnP request.

8. A digital content distribution system according to any preceding claim, comprising a plurality of media servers, each being remote of each other and each being arranged, subject to authentication according to predefined access credentials, to serve local digital media content to one or more others of the plurality of media servers.

9. A digital content distribution method including:
providing a virtual digital content repository at a media server, the virtual digital media content repository referencing local digital media content and remote digital media content, local digital media content being media content that is locally accessible to the media server and remote digital media content being media content that is remotely accessible to said media server from a remote source and is subject to authentication;
serving media content from the virtual digital content repository on request to one or more client systems; and,
upon request for remote digital media content referenced in the virtual digital media repository, causing the media server to authenticate with said remote source, obtain data on said requested remote digital media content from the remote source and serve the remote digital media content to the requesting client system.

10. A digital content distribution method according to claim 9, further comprising:
presenting the virtual digital media content repository as comprising content available locally; and,
performing said authentication and obtaining of data on remote media content data transparently to said requesting client system.

11. A digital content distribution method according to claim 9 or 10, wherein said remote source is a further media server, the method further comprising:
serving local digital media content from said further media server to said media server or direct to said requesting client system upon authentication of a request from the media server.

12. A digital content distribution method system according to claim 9, 10 or 11, further comprising providing a tracker system arranged to communicate with the or each media server, and periodically providing data from the or each media server to said tracker system, said data including a network address at which the respective media server is contactable.

13. A digital content distribution method according to claim 12, further comprising providing data from the or each media server to said tracker system on systems or users to be permitted access to local digital media content,
the or each media server periodically obtaining, for each local user or system, data from the tracker system on other media servers that the local user or system is designated as being permitted access to; and,
updating the virtual digital media repository of the respective media server in dependence on said obtained data.

14. A digital content distribution method according to claim 11, wherein the method further comprises:
communicate between the media server and the further media server by adding access credentials to a UPnP request received from said client system;
inserting the modified UPnP request within an HTTP communication and passing the HTTP communication to the further media server,
extracting the modified UPnP request at the further media server from the HTTP communication; and,
subject to authentication using said access credentials, processing said UPnP request at the further media server as a conventional UPnP request.

15. A digital content distribution system according to any of claims 9 to 14, further comprising operating a plurality of media servers, each being remote of each other and each being arranged, subject to authentication according to predefined access credentials, to serve local digital media content to one or more others of the plurality of media servers.
